# EUROPÄISCHE PATENTSCHRIFT

(11) **EP 3 230 618 B1**
(45) Veröffentlichungstag und Bekanntmachung des Hinweises auf die Patenterteilung: **08.05.2019**
(21) Anmeldenummer: 15797276.1
(22) Anmeldetag: 10.11.2015
(51) Int. Cl.: F16F 9/16, F16F 9/34, F16F 9/46, F16F 9/516

(54) **VERSTELLBARE DÄMPFVENTILEINRICHTUNG**
ADJUSTABLE DAMPING VALVE DEVICE
DISPOSITIF FORMANT VANNE D'AMORTISSEMENT RÉGLABLE

(30) Priorität: 12.12.2014 DE 102014225702
(43) Veröffentlichungstag der Anmeldung: 18.10.2017
(73) Patentinhaber: ZF Friedrichshafen AG, 88046 Friedrichshafen (DE)
(72) Erfinder: MANGER, Thomas, 97535 Wasserlosen (DE); SCHMITT, Stefan, 97469 Gochsheim (DE); ZEISSNER, Bernd, 97332 Volkach (DE); SOLF, Thomas, 97529 Sulzheim (DE); RUHMANN, Lukas, 91350 Gremsdorf (DE)
(86) Internationale Anmeldenummer: PCT/EP2015/076120
(87) Internationale Veröffentlichungsnummer: WO 2016/091506

(56) Entgegenhaltungen:
- EP-A1- 1 657 469
- EP-A2- 0 715 091
- EP-A2- 2 108 857
- DE-A1- 19 731 138

## Beschreibung

Die Erfindung betrifft eine verstellbare Dämpfventileinrichtung gemäß dem Oberbegriff von Patentanspruch 1.

Aus der DE 10 2008 015 412 B4 ist eine Dämpfventileinrichtung bekannt, die stufenlos verstellbar ist. Eine weitere Grundfunktion besteht darin, dass für jeweils eine Bewegungsrichtung einer Kolbenstange eines mit der Dämpfventileinrichtung bestückten Schwingungsdämpfers eine separate Dämpfventilbaugruppe vorliegt, d. h. jede Dämpfventilbaugruppe erzeugt nur für eine einzige Bewegungsrichtung der Kolbenstange eine Dämpfkraft. Grundsätzlich bietet diese Bauform den wesentlichen Vorteil, dass die Dämpfkraftkennlinie der einen Dämpfventilbaugruppe unabhängig von der Dämpfkraftkennlinie der zweiten Dämpfventilbaugruppe gewählt und technisch umgesetzt werden kann. DE 197 31 138 A1 beschreibt ebenfalls eine Dämpfventileinrichtung zur Erzeugung unterschiedlicher Dämpfkraftkennlinien für die Einfahr- und die Ausfahrrichtung.

Wenn man jedoch bei Dämpfventilbaugruppen deutlich unterschiedliche Dämpfkraftkennlinien erreichen will, dann unterscheiden sich u. U. die Dämpfventilbaugruppen hinsichtlich der Abmessungen einiger Bauteile, z. B. Ventilfedern. Diese Varianz in den Bauteilen verteuert die Dämpfventilbaugruppen. Optimal wäre es, wenn man eine Standard-Dämpfventilbaugruppe für beide Kolbenstangenbewegungsrichtungen verwenden könnte und etwaige Dämpfkraftkennlinieunterschiede einfach über die elektrische Ansteuerung der Dämpfventilbaugruppen realisierbar wäre. Aufgrund der teilweise deutlichen Unterschiede in den Dämpfkraftkennlinien für die Bedämpfung der Kolbenstangenbewegung in Einfahr- und in Ausfahrrichtung sind teilweise schon die Grenzen erreicht, d. h. die Dämpfkrafkennlinienunterschiede lassen sich nicht mehr in allen Fällen über die elektrische Ansteuerung der Dämpfventilbaugruppen erreichen.

Die Aufgabe der vorliegenden Erfindung besteht darin, die Variabilität bezüglich der Dämpfkraftkennlinie einer Dämpfventileinrichtung zu verbessern.

Erfindungsgemäß wird die Aufgabe dadurch gelöst, dass die erste Dämpfventilbaugruppe nur für eine Durchströmungsrichtung eine Dämpfkraft erzeugt und die zweite Dämpfventilbaugruppe in der Einstellung für die maximal große Dämpfkraft einen vom Dämpfmedium durchströmbaren Mindestquerschnitt aufweist, so dass die zweite Dämpfventileinrichtung eine Dämpfkraft in beiden Durchströmungsrichtungen erzeugt.

Mit diesem Bauprinzip einer Dämpfventileinrichtung wird einerseits die unabhängige Dämpfventileinstellung für jede Durchströmungsrichtung beibehalten, d. h. es ist eine strikte Trennung für eine Bedämpfung einer Ausfahrbewegung einer Kolbenstange aus einem Zylinder und einer Einfahrbewegung der Kolbenstange in den Zylinder möglich. Verändert man beispielsweise die Dämpfkrafteinstellung für die Bedämpfung der Einfahrbewegung, so hat diese Einstellung keinen Einfluss auf die Dämpfkraft bei einer Ausfahrbewegung.

Die Einfahrbewegung soll aus Komfortgründen in der Regel geringer bedämpft werden als die Ausfahrbewegung. Ein Hauptvolumenstrom fließt bei einer Einfahrbewegung durch die erste Dämpfventilbaugruppe und ein Nebenstrom kann über den Mindestquerschnitt der zweiten Dämpfventilbaugruppe wirksam werden. In der Wirkung ist dann die zweite Dämpfventilbaugruppe der ersten Dämpfventilbaugruppe hydraulisch parallel geschaltet. Dadurch kann die Dämpfkraftkennlinie der gesamten Dämpfventileinrichtung für die Bedämpfung der Einfahrbewegung der Kolbenstange abgesenkt werden, ohne dass grundlegend unterschiedliche Dämpfventilbaugruppen verwendet werden müssen. Man kann also eine Standardbauform für die Dämpfventilbaugruppen verwenden und trotzdem deutlich unterschiedliche Dämpfkraftkennlinien realisieren.

Vorteilhafterweise ist vorgesehen, dass beide Dämpfventilbaugruppen in einem gemeinsamen Gehäuse angeordnet sind. Dadurch vereinfachen sich die Strömungswege.

Das Gehäuse für jede Dämpfventilbaugruppe vorteilhafterweise eine Ventilkammer auf, die durch eine Trennwand voneinander räumlich getrennt sind. Die räumliche Trennung zweier Ventilkammern erleichtert die Strömungsführung zu den beiden Dämpfventilbaugruppen.

Eine weitere konstruktive Vereinfachung der Dämpfventileinrichtung besteht darin, dass jede Ventilkammer nur einen Anschluss an eine einzige Arbeitskammer eines Schwingungsdämpfers aufweist.

Des Weiteren ist vorgesehen, dass mindestens einer Dämpfventilbaugruppe eine Rückschlagventilbaugruppe zugeordnet ist, wobei die Rückschlagventilbaugruppe in der einen Durchströmungsrichtung einen vollständigen Durchlass und in der Gegenrichtung einen begrenzten Durchlass freigibt. Die Rückschlagventilbaugruppe kann sehr einfach gehalten sein, beispielsweise durch zwei geschichtete Ventilscheiben, die in einer Richtung gemeinsam eine Betriebsbewegung ausführen und in einer zweiten Anströmrichtung nur eine der beiden Ventilscheiben einen Durchlassquerschnitt in der anderen Ventilscheibe freigibt. Es handelt sich also um extrem einfache Bauteile, die zudem zuverlässig funktionieren, auch wenn die Energieversorgung zur Ansteuerung der Dämpfventileinrichtung ausfallen sollte.

Es besteht die Option, dass die Dämpfventilbaugruppe ein passives Einlaufventil aufweist, wobei in dem Einlaufventil die Rückschlagventilgruppe angeordnet ist. Das Einlaufventil ist dem verstellbaren Ventil innerhalb der Dämpfventilbaugruppe vorgeschaltet, d. h. ein Hauptstrom des Dämpfmediums passiert zuerst das Einlaufventil und anschließend das verstellbare Dämpfventil.

Alternativ besteht die Möglichkeit, dass mindestens einer verstellbaren Dämpfventilbaugruppe eine Rückschlagventilbaugruppe in Abflussrichtung nachgeschaltet ist. Der Hauptstrom kann den Mindestquerschnitt der zweiten Dämpfventilbaugruppe in jeder Strömungsrichtung passieren, jedoch in einer entgegengesetzten Durchströmungsrichtung wird der weitere Abfluss blockiert, so dass für die blockierte Strömungsrichtung keine äußere Dämpfkraft erzeugt wird.

Eine besonders bauraumoptimierte Lösung besteht darin, dass funktional in Zuströmrichtung zwischen den beiden verstellbaren Dämpfventilbaugruppen die Rückschlagventilbaugruppe angeordnet ist.

Bauraumanalysen haben bestätigt, dass es besonders vorteilhaft ist, wenn die Rückschlagventilbaugruppe innerhalb der Trennwand angeordnet ist.

Eine ganz besonders einfache Möglichkeit den Mindestquerschnitt zu erreichen besteht darin, dass die Dämpfventilbaugruppe einen Hauptstufenventilkörper aufweist, der zusammen mit einer Ventilsitzfläche ein Hauptstufenventil bildet, das den Mindestquerschnitt bereitstellt.

Bei einer Ausführungsform ist vorgesehen, dass der Mindestquerschnitt von einem Voröffnungsventil gebildet wird, das funktional der verstellbaren Dämpfventilbaugruppe parallel geschaltet ist. Diese Ausführung bietet den Vorteil, dass die beiden Dämpfventilbaugruppen konstruktiv bis ins Detail identisch sein können. Die Verschiebung der Dämpfkraftkennlinie für einen vergrößerten Komfortbereich erfolgt mit dem Voröffnungsventil, das nur in einer Durchströmungsrichtung wirksam ist.

Um die Anzahl der notwendigen Bauteile zu minimieren, ist das Voröffnungsventil Bestandteil der Rückschlagventilanordnung.

Bei einer bevorzugten Ausführungsform weist die Rückschlagventilanordnung zwei sich gegensinnig öffnende Rückschlagventile auf. Mit einer einzigen Federanordnung als Teil der Rückschlagventilanordnung lassen sich zwei Rückschlagventile eindeutig schalten.

Anhand der folgenden Figurenbeschreibung soll die Erfindung näher erläutert werden.

Es zeigt:
- Fig. 1: Ausschnitt aus einem Schwingungsdämpfer mit einer verstellbaren Dämpfventileinrichtung
- Fig. 2: Dämpfventilbaugruppe in einer Schnittdarstellung
- Fig. 3 u. 4: Ausschnitte der Rückschlagventilbaugruppe aus Fig. 2
- Fig. 5: Hauptstufenventil in Detail
- Fig. 6: Dämpfventilbaugruppe mit einer Rückschlagventilbaugruppe innerhalb einer Trennwand der Dämpfventileinrichtung

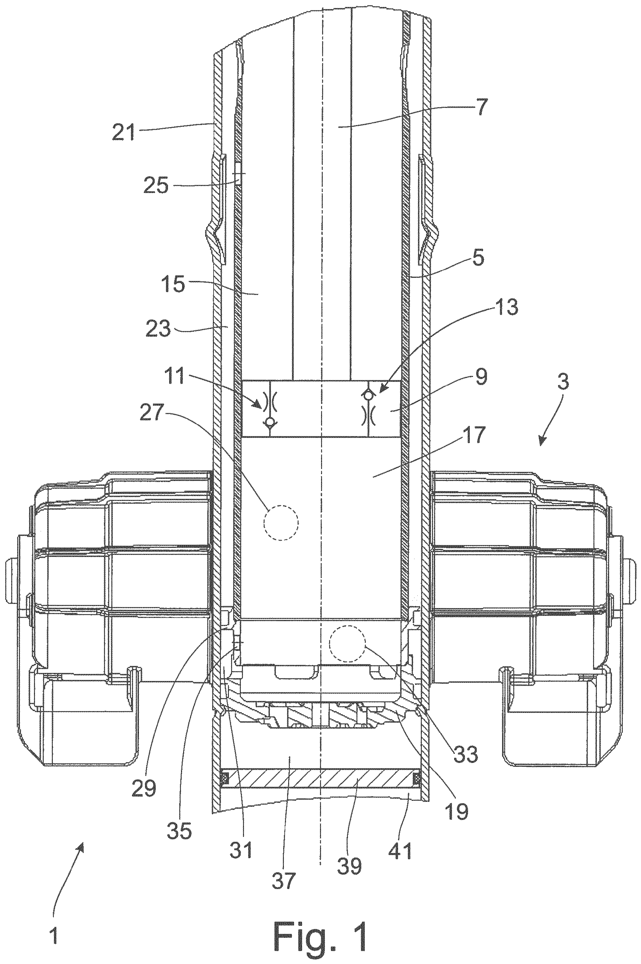

Die Figur 1 zeigt einen Ausschnitt aus einem Schwingungsdämpfer 1 mit einer verstellbaren Dämpfventileinrichtung 3. Der Schwingungsdämpfer 1 umfasst einen inneren Zylinder 5, in dem eine Kolbenstange 7 zusammen mit einem Kolben 9 axial beweglich geführt ist. Dämpfventile 11; 13 für jeweils eine Bewegungsrichtung der Kolbenstange 7 sind optional möglich und als Schaltsymbol eingezeichnet, da eine große Anzahl von möglichen konstruktiven Ausgestaltungen besteht. Der Kolben 9 unterteilt den inneren Zylinder 5 in einen kolbenstangenseitigen und einen kolbenstangenfernen Arbeitsraum 15; 17, die beide vollständig mit Dämpfmedium gefüllt sind.

Der innere Zylinder 5 stützt sich auf einem Bodenventilträger 19 ab. Die Bodenventilfunktion ist optional zu sehen. Man könnte auch ein einfaches offenes Ende des inneren Zylinders 5 im Bereich des kolbenstangenfernen Arbeitsraums 17 vorsehen.

Ein äußerer Zylinder 21 bildet mit dem inneren Zylinder 5 eine Strömungspassage 23 zwischen mindestens einer Anschlussöffnung 25 im kolbenstangenseitigen Arbeitsraum 15 und einer ersten Anschlussöffnung 27 der verstellbaren Dämpfventileinrichtung. Die Anschlussöffnung 25 innerhalb der Wandung des inneren Zylinders 5 ist tendenziell am Hubende der ausfahrenden Kolbenstange 7ausgeführt.

Der Bodenventilträger 19 verfügt über einen umlaufenden abgedichteten Bund 29, der die Strömungspassage 23 zwischen dem kolbenstangenseitigen Arbeitsraum 15 und der Dämpfventileinrichtung 3 von einer zweiten Strömungspassage 31 zwischen dem kolbenstangenfernen Arbeitsraum 17 und einer zweiten Anschlussöffnung 33 zur Dämpfventileinrichtung 3 abdichtet. Die zweite Strömungspassage 31 ist über eine Anschlussöffnung 35 im Bodenventilträger 19 mit dem kolbenstangenfernen Arbeitsraum 17 verbunden.

In axialer Verlängerung schließt sich jenseits des Bodenventilträgers 19 ein Ausgleichsraum 37 mit einem verschiebbaren Trennkolben 37 zu einem Gasraum 41 an. Bei einer Ausfahrbewegung wird das vom Kolben verdrängte Dämpfmedium über die erste Strömungspassage 23 der Dämpfventileinrichtung 3 zugeführt. Dabei tritt Dämpfmedium aus der Dämpfventileinrichtung 3 über die zweite Strömungspassage 31 in den kolbenstangenseitigen Arbeitsraum 17 über.

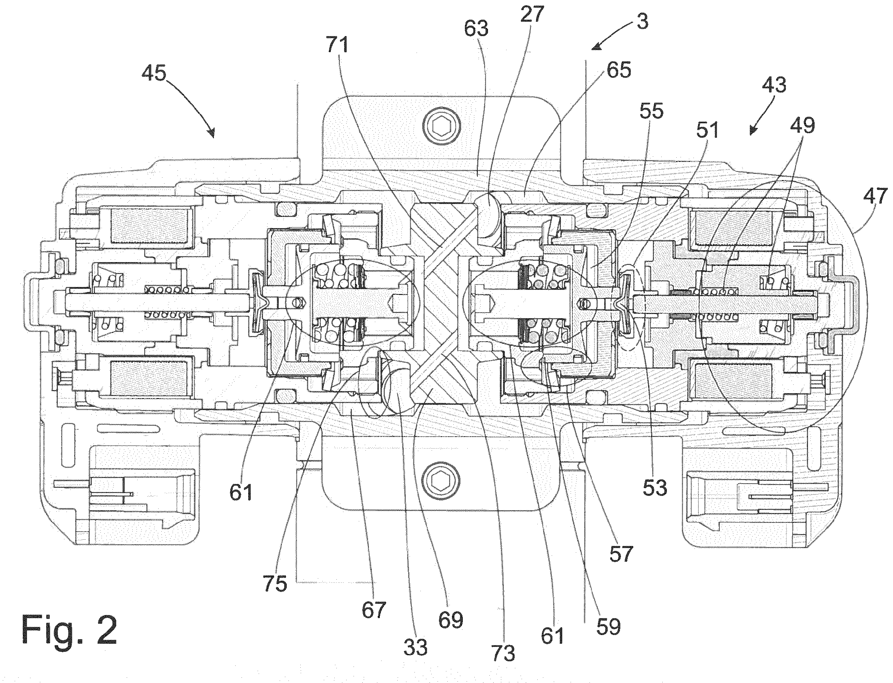

Die Figur 2 zeigt eine mögliche Ausführungsform der Dämpfventileinrichtung 3 in einer Schnittdarstellung. Die Dämpfventileinrichtung 3 umfasst zwei verstellbare Dämpfventilbaugruppen 43; 45. Beide Dämpfventilbaugruppen 43; 45 verfügen über einen identischen Grundaufbau. Ein elektromechanischer Aktuator 47 pro Dämpfventilbaugruppe 43; 45 beaufschlagt gegen eine Vorstufenventilfederanordnung 49 einen Vorstufenventilkörper 51. Ein Vorstufenventilventilkörper 53 bestimmt einen Abflussquerschnitt an dem Vorstufenventil 51, wobei der Abflussquerschnitt wiederum einen Steuerdruck in einem Steuerraum 55 eines Hauptstufenventils 57 bestimmt. Der Steuerdruck im Steuerraum 55 bestimmt eine Schließkraft auf einen Hauptstufenventilkörper 59 gegen eine Öffnungskraft aufgrund eines Arbeitsdrucks in einem der Arbeitsräume 15; 17, wenn die Kolbenstange eine Verschiebebewegung ausführt. In diesem Ausführungsbeispiel ist dem Hauptstufenventil 57 noch ein passives Einlaufventil 61 vorgeschaltet.

Beide Dämpfventilbaugruppen 43; 45 sind in einem gemeinsamen Gehäuse 63 angeordnet. Das Gehäuse 63 weist für jede Dämpfventilbaugruppe 43; 45 eine Ventilkammer 65; 67 auf, wobei beide Ventilkammern 65; 67 durch eine Trennwand 69 räumlich voneinander getrennt sind. Die Anschlussöffnung 27 mündet in die Ventilkammer 65, in der die Dämpfventilbaugruppe 43 für die Bedämpfung der Einfahrbewegung der Kolbenstange 7 angeordnet ist. Mindestens ein Verbindungskanal 71 führt das Dämpfmedium aus der Ventilkammer 65 zum Einlaufventil 61 der verstellbaren Dämpfventilbaugruppe 45 für die Bedämpfung der Ausfahrbewegung der Kolbenstange 7.

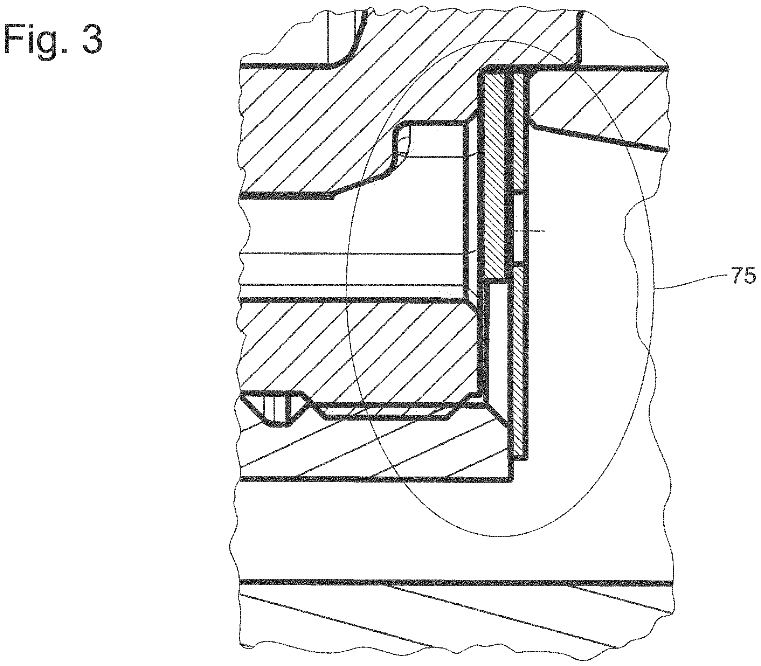

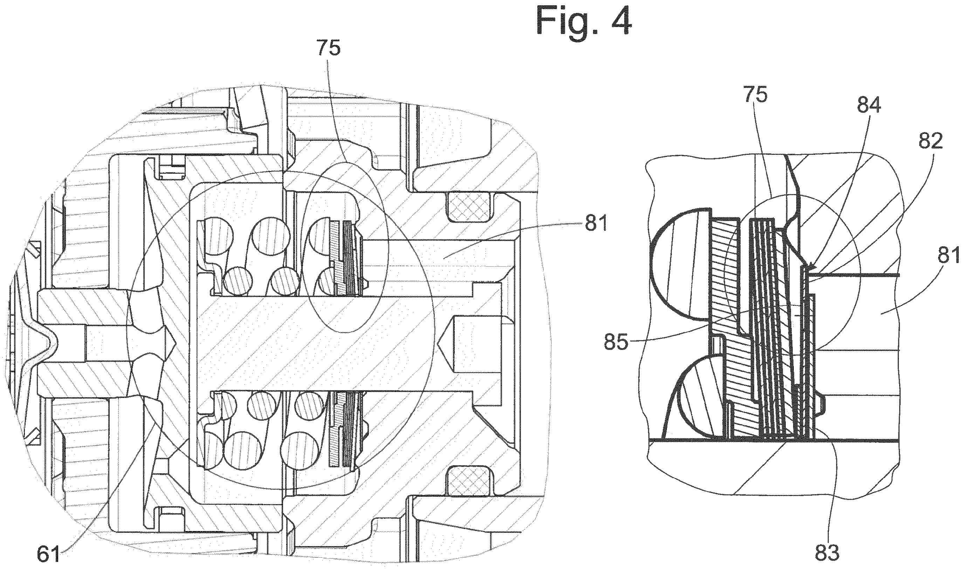

Je nach Bestromung des Aktuators 47 wirkt auf den Hauptstufenventilkörper 59 der Dämpfventilbaugruppe 45 eine mehr oder weniger große Schließkraft. Das durch das Hauptstufenventil 57 strömende Dämpfmedium fließt über die Anschlussöffnung 33 aus der Ventilkammer 67 in den kolbenstangenfernen Arbeitsraum 17. Die Dämpfventilbaugruppe für die Bedämpfung der Einfahrrichtung wird ausgehend von der Anschlussöffnung 27 nicht durchströmt, da eine Rückschlagventilventilanordnung 75 gemäß der Fig. 3 oder der Fig. 4 die Einströmung in das Hauptstufenventil 57 der Baugruppe 43 verhindert.

Bei einer Einfahrbewegung der Kolbenstange 7 wird Dämpfmedium aus dem kolbenstangenfernen Arbeitsraum 17 über die Anschlussöffnung 33 in den Ventilraum 67 der für die Ausfahrbewegung der Kolbenstange 7 bedämpfende Dämpfventilbaugruppe 67 gefördert. Ein Hauptstrom des verdrängten Dämpfmediums fließt über den Verbindungskanal 73 zur Dämpfventilbaugruppe 43. Das Dämpfmedium passiert das vorgelagerte Einlaufventil 61 und setzt den Strömungsweg über das Hauptstufenventil 57 in die Ventilkammer 65 fort. Die Rückschlagventilventilanordnung 75 gemäß der Fig. 3 oder 4 hebt dabei mit einem vernachlässigbaren Widerstand ab.

Ein Nebenstrom kann die sich öffnende Rückschlagventilbaugruppe 75 der Dämpfventilbaugruppe 45 für die Ausfahrrichtung passieren. Eine mögliche Ausführungsform der Rückschlagventilbaugruppe 75 ist am Abfluss aus dem Hauptstufenventil 57 befestigt und in der Figur 3 vergrößert dargestellt.

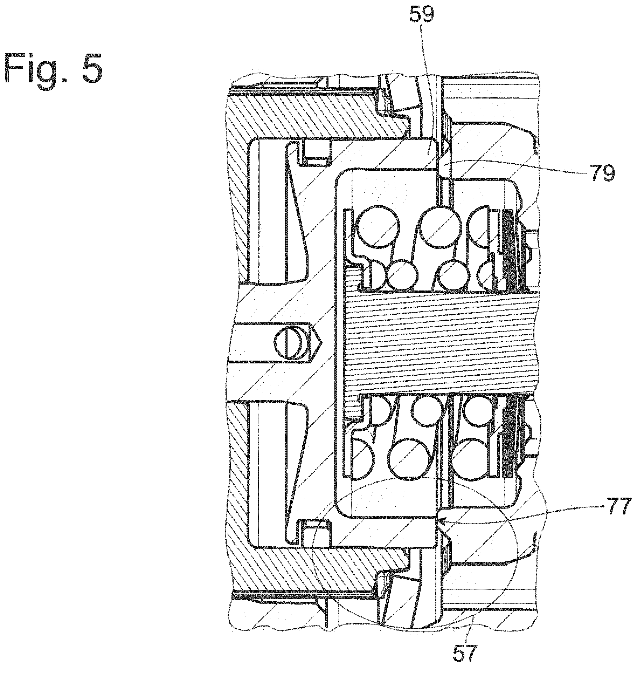

Der Hauptstufenventilkörper 59 und eine Ventilsitzfläche 77 bilden das Hauptstufenventil 57, wie die Figur 5 vergrößert zeigt. Dieses Hauptstufenventil 57 stellt einen Mindestquerschnitt 79 bereit, der auch bei maximal geschlossenem Hauptstufenventil 57 stets geöffnet ist. Der Mindestquerschnitt 79 kann beispielsweise über eine Prägung in der Ventilsitzfläche 77 oder dem Hauptstufenventilkörper 59 ausgeführt sein. Dieser Mindestquerschnitt 79 vergrößert unabhängig von der Ansteuerung des Hauptstufenventils 57 der Dämpfventilbaugruppe 45 den vorhandenen Übertrittsquerschnitt zwischen den beiden Arbeitsräumen 15; 17 innerhalb der Dämpfventileinrichtung 3. Bei vergleichbarem Verdrängerverhalten der Kolbenstange 7 mit dem Kolben 9 steht also in Einfahrrichtung der Kolbenstange 7 ein größerer Gesamtquerschnitt zur Verfügung als bei einer Ausfahrbewegung der Kolbenstange 7. In Einfahrrichtung der Kolbenstange 7 werde beide Dämpfventilbaugruppen 43; 45 durchströmt und bei einer Ausfahrbewegung nur eine Dämpfventilbaugruppe 45.

Die Rückschlagventilanordnung 75 am Abfluss aus dem Hauptstufenventil 57 stellt eine mögliche Ausführungsform dar. Alternativ kann das Einlaufventil 61 der Dämpfventilbaugruppe 45 diese Funktion ebenfalls erfüllen. In der Figur 4 ist das Einlaufventil 61 der Dämpfventilbaugruppe 45 vergrößert dargestellt. Endseitig zu einem Einströmkanal 81 ist eine erste elastische Ventilscheibe 82 auf einer Ventilsitzfläche 84 vorgespannt. In Einströmrichtung in den Einströmkanal 81 schließt sich eine Deckscheibe 83 an, die eine Aussparung 85 in der Einströmscheibe abdeckt. Damit ist das Einströmen in den Einströmkanal 81 über die abhebende Deckscheibe 83 gegen eine geringe Vorspannung möglich.

Das Ausströmen aus dem Kanal 81 ist jedoch durch die Kombination der Deckscheibe 83 mit der Ventilscheibe 82 nur gegen einen deutlichen größeren Öffnungswiderstand möglich.

Bei einer Ausführung gemäß der Fig. 3 fließt der Nebenstrom des Dämpfmediums ausgehend von der Rückschlagventilanordnung zuerst durch die Rückschlagventilanordnung 75 und anschließend durch das Hauptstufenventil bzw. die Rückschlagventilanordnung ist in Strömungsrichtung ausgehend vom kolbenstangenfernen Arbeitsraum 17 dem Hauptstufenventil 57 vorgeschaltet. In der Bauform nach Fig. 4 führt der Strömungsweg durch den offenen Mindestquerschnitt 79 und anschließend durch die Rückschlagventilanordnung 75 bzw. die Rückschlagventilanordnung 75 ist in Strömungsrichtung dem Hauptstufenventil 57 nachgeschaltet.

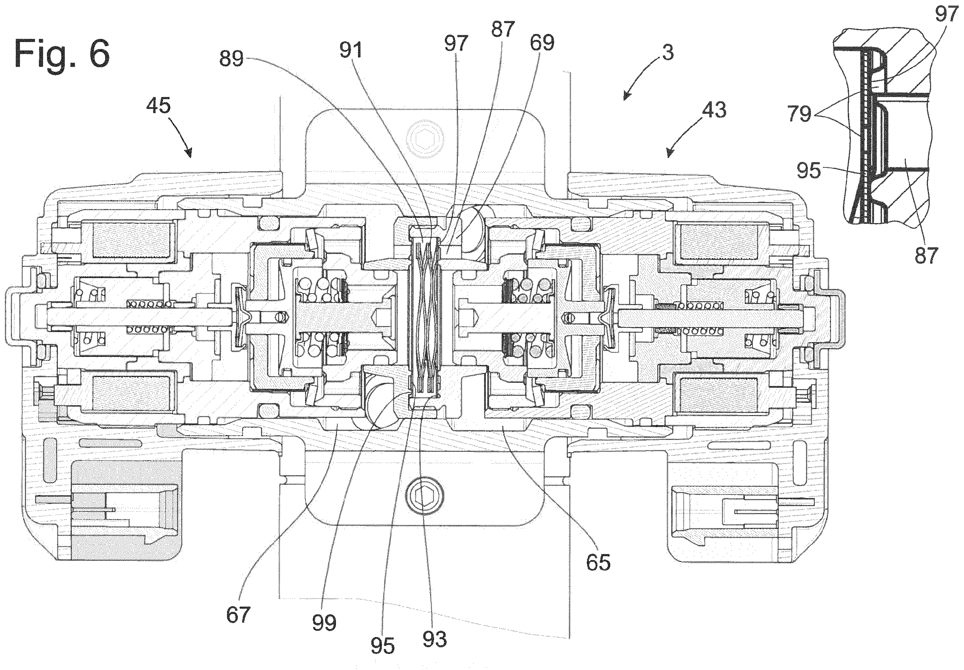

Die Figur 6 zeigt eine Ausführungsform der Dämpfventileinrichtung 3, bei der die Trennwand 69, abweichend zu der Ausführung nach Fig. 2, keine diagonal verlaufenden Verbindungskanäle 71; 73, sondern einen im Axialverlauf unterteilten Verbindungskanal 87 aufweist. Der Verbindungskanal 87 verfügt über einen Verteilerraum 89, in dem mindestens eine Schließfeder 91 angeordnet ist, die zwei Ventilscheiben 93; 95 auf gegenüberliegenden Ventilsitzflächen 97; 99 vorspannt. Damit liegen zwei gegensinnig wirksame Rückschlagventile vor. Wenn ein Rückschlagventil öffnet, dann wird das andere Rückschlagventil in die Schließposition vorgespannt. Diese Bauform führt zu einer einfach herstellbaren Trennwand 69, die zweiteilig ausgeführt ist. Des Weiteren besteht die Möglichkeit, dass der Mindestquerschnitt 79 in der Ventilsitzfläche 97; 99 ausgeführt ist und damit ein Voröffnungsventil bildet, das der verstellbaren Dämpfventilbaugruppe 43 hydraulisch parallel geschaltet ist. Vergleichbar mit der Beschreibung im Zusammenhang mit der Fig. 2 kann eine Ventilscheibe des Rückschlagventils oder die Ventilsitzfläche 97; 99 mit einem Ausschnitt oder einer Prägung versehen sein, so dass auch bei ansonsten geschlossenem Rückschlagventil der Mindestquerschnitt 79 geöffnet ist.

Bei einer derartigen Ausführung fließt der Hauptstrom ausgehend vom Arbeitsraum 17 in die verstellbare Dämpfventileinrichtung 3 und dann weiter in den Ventilraum 67 der Dämpfventilbaugruppe 45. Von dort ausgehend passiert der Nebenstrom nicht das Hauptstufenventil 57 oder das Einlaufventil 61, sondern die Rückschlagventilanordnung 75 der Trennwand 69. Bei einer Anströmung aus Richtung des kolbenstangenseitigen Arbeitsraums 15 ist der Zustrom in den Verteilerraum 89 maximal geöffnet und damit der Mindestquerschnitt unwirksam. Über diesen Strömungsweg wird nur die Dämpfventilbaugruppe 45 beaufschlagt. Ein paralleler Strömungspfad durch das Rückschlagventil 95; 99 ist blockiert.

Auch bei dieser Ausführung der Trennwand 69 ist eine Rückschlagventilanordnung 75 gemäß der Beschreibung zur Fig. 2 in Zusammenschau mit den Figuren 3 oder 4 möglich, d. h. bei einer Einfahrbewegung der Kolbenstange 7 fließt der Nebenstrom durch das Hauptstufenventil 57, das den Mindestquerschnitt 79 auch bei maximal geschlossenem Hauptstufenventil 57 bestimmt.

Grundsätzlich ist es auch möglich, die Dämpfkraft für den Einfahrbewegung zu reduzieren, wenn die Dämpfventilbaugruppe 45 für die Ausfahrbewegung über den Mindestquerschnitt 79 hinaus vom Aktuator 47 geöffnet wird

### Bezugszeichen

- 1: Schwingungsdämpfer
- 3: Dämpfventileinrichtung
- 5: Innerer Zylinder
- 7: Kolbenstange
- 9: Kolben
- 11: Dämpfventil
- 13: Dämpfventil
- 15: Kolbenstangenseitigen Arbeitsraum
- 17: Kolbenstangenfernen Arbeitsraum
- 19: Bodenventilträger
- 21: äußerer Zylinder
- 23: Strömungspassage
- 25: Anschlussöffnung
- 27: Anschlussöffnung
- 29: Bund
- 31: zweite Stömungspassage
- 33: zweite Anschlussöffnung
- 35: Anschlussöffnung
- 37: Ausgleichsraum
- 39: Trennkolben
- 41: Gasraum
- 43: Dämpfventilbaugruppe
- 45: Dämpfventilbaugruppe
- 47: Aktuator
- 49: Vorstufenventilfederanordnung
- 51: Vorstufenventilkörpfer
- 53: Vorstufenventil
- 55: Steuerraum
- 57: Hauptstufenventil
- 59: Hauptstufenventilkörper
- 61: Einlaufventil
- 63: Gehäuse
- 65: Ventilkammer
- 67: Ventilkammer
- 69: Trennwand
- 71: Verbindungskanal
- 73: Verbindungskanal
- 75: Rückschlagventilanordnung
- 77: Ventilsitzfläche
- 79: Mindestquerschnitt
- 81: Einströmkanal
- 82: Ventilscheibe
- 83: Deckscheibe
- 84: Ventilsitzfläche
- 85: Aussparung
- 87: Verbindungskanal
- 89: Verteilerraum
- 91: Schließfeder
- 93: Ventilscheibe
- 95: Ventilscheibe
- 97: Ventilsitzfläche
- 99: Ventilsitzfläche

## Patentansprüche

1. Verstellbare Dämpfventileinrichtung (3) mit einer ersten verstellbaren Dämpfventilbaugruppe (43) für eine erste Durchströmungsrichtung und eine zweite verstellbare Dämpfventilbaugruppe (45) für eine zweite Durchströmungsrichtung, wobei beide Dämpfventilbaugruppen (43; 45) unabhängig voneinander verstellbar sind, **dadurch gekennzeichnet, dass** die erste Dämpfventilbaugruppe (43) nur für eine Durchströmungsrichtung eine Dämpfkraft erzeugt und die zweite Dämpfventilbaugruppe (45) in der Einstellung für die maximal große Dämpfkraft einen vom Dämpfmedium durchströmbaren Mindestquerschnitt (79) aufweist, so dass die zweite Dämpfventilbaugruppe (45) eine Dämpfkraft in beiden Durchströmungsrichtungen erzeugt.

2. Verstellbare Dämpfventileinrichtung nach Anspruch 1, **dadurch gekennzeichnet, dass** beide Dämpfventilbaugruppen (43; 45) in einem gemeinsamen Gehäuse (63) angeordnet sind.

3. Verstellbare Dämpfventileinrichtung nach Anspruch 2, **dadurch gekennzeichnet, dass** das Gehäuse (63) für jede Dämpfventilbaugruppe (43; 45) eine Ventilkammer (65; 67) aufweist, die durch eine Trennwand (69) voneinander räumlich getrennt sind.

4. Verstellbare Dämpfventileinrichtung nach Anspruch 3, **dadurch gekennzeichnet, dass** jede Ventilkammer (65; 67) nur einen Anschluss (27; 33) an eine einzige Arbeitskammer (15; 17) eines Schwingungsdämpfers (1) aufweist.

5. Verstellbare Dämpfventileinrichtung nach Anspruch 1, **dadurch gekennzeichnet, dass** mindestens einer Dämpfventilbaugruppe (45) eine Rückschlagventilbaugruppe (75) zugeordnet ist, wobei die Rückschlagventilbaugruppe (75) in der einen Durchströmungsrichtung einen vollständigen Durchlass und in der Gegenrichtung einen begrenzten Durchlass freigibt.

6. Verstellbare Dämpfventileinrichtung nach Anspruch 5, **dadurch gekennzeichnet, dass** die Dämpfventilbaugruppe (45) ein passives Einlaufventil (61) aufweist, wobei in dem Einlaufventil (61) die Rückschlagventilbaugruppe (75) angeordnet ist.

7. Verstellbare Dämpfventileinrichtung nach Anspruch 5, **dadurch gekennzeichnet, dass** mindestens einer verstellbaren Dämpfventilbaugruppe (45) eine Rückschlagventilbaugruppe (75) in Abflussrichtung nach geschaltet ist.

8. Verstellbare Dämpfventileinrichtung nach Anspruch 1, **dadurch gekennzeichnet, dass** funktional in Zuströmrichtung zwischen den beiden verstellbaren Dämpfventilbaugruppen (43; 45) eine Rückschlagventilbaugruppe (75) angeordnet ist.

9. Verstellbare Dämpfventileinrichtung nach Anspruch 8, **dadurch gekennzeichnet, dass** die Rückschlagventilbaugruppe (75) innerhalb der Trennwand (69) angeordnet ist.

10. Verstellbare Dämpfventileinrichtung nach einem der Ansprüche 1-9, **dadurch gekennzeichnet, dass** die Dämpfventilbaugruppe (45) einen Hauptstufenventilkörper (59) aufweist, der zusammen mit einer Ventilsitzfläche (77) ein Hauptstufenventil (57) bildet, das den Mindestquerschnitt (79) bereitstellt.

11. Verstellbare Dämpfventileinrichtung nach Anspruch 1, **dadurch gekennzeichnet, dass** der Mindestquerschnitt (79) von einem Voröffnungsventil (91; 93; 97) gebildet wird, das funktional der verstellbaren Dämpfventilbaugruppe (43) parallel geschaltet ist.

12. Verstellbare Dämpfventileinrichtung nach Anspruch 11, **dadurch gekennzeichnet, dass** das Voröffnungsventil (91; 93; 99) Bestandteil der Rückschlagventilanordnung (75) ist.

13. Verstellbare Dämpfventileinrichtung nach Anspruch 11, **dadurch gekennzeichnet, dass** die Rückschlagventilanordnung (75) zwei sich gegensinnig öffnende Rückschlagventile (91; 93; 95; 97; 99) aufweist.

## Claims

1. Adjustable damper valve device (3) having a first adjustable damper valve assembly (43) for a first throughflow direction and a second adjustable damper valve assembly (45) for a second throughflow direction, it being possible for the two damper valve assemblies (43; 45) to be adjusted independently of one another, **characterized in that** the first damper valve assembly (43) generates a damper force only for one throughflow direction, and the second damper valve assembly (45) has a minimum cross section (79), through which the damper medium can flow, in the setting for the maximum possible damper force, with the result that the second damper valve assembly (45) generates a damper force in both throughflow directions.

2. Adjustable damper valve device according to Claim 1, **characterized in that** the two damper valve assemblies (43; 45) are arranged in a common housing (63) .

3. Adjustable damper valve device according to Claim 2, **characterized in that** the housing (63) has a valve chamber (65; 67) for each damper valve assembly (43; 45), which valve chambers (65; 67) are divided spatially from one another by way of a dividing wall (69) .

4. Adjustable damper valve device according to Claim 3, **characterized in that** each valve chamber (65; 67) has only one connector (27; 33) to a single working chamber (15; 17) of a vibration damper (1).

5. Adjustable damper valve device according to Claim 1, **characterized in that** at least one damper valve assembly (45) is assigned a check valve assembly (75), the check valve assembly (75) enabling a complete passage in the one throughflow direction and a limited passage in the opposite direction.

6. Adjustable damper valve device according to Claim 5, **characterized in that** the damper valve assembly (45) has a passive inlet valve (61), the check valve assembly (75) being arranged in the inlet valve (61).

7. Adjustable damper valve device according to Claim 5, **characterized in that** a check valve assembly (75) is connected downstream of at least one adjustable damper valve assembly (45) in the outlet direction.

8. Adjustable damper valve device according to Claim 1, **characterized in that** a check valve assembly (75) is arranged functionally in the inflow direction between the two adjustable damper valve assemblies (43; 45).

9. Adjustable damper valve device according to Claim 8, **characterized in that** the check valve assembly (75) is arranged within the dividing wall (69).

10. Adjustable damper valve device according to one of Claims 1 to 9, **characterized in that** the damper valve assembly (45) has a main stage valve body (59) which, together with a valve seat face (77), forms a main stage valve (57) which provides the minimum cross section (79).

11. Adjustable damper valve device according to Claim 1, **characterized in that** the minimum cross section (79) is formed by a pre-opening valve (91; 93; 97) which is connected functionally in parallel with the adjustable damper valve assembly (43).

12. Adjustable damper valve device according to Claim 11, **characterized in that** the pre-opening valve (91; 93; 99) is a constituent part of the check valve arrangement (75).

13. Adjustable damper valve device according to Claim 11, **characterized in that** the check valve arrangement (75) has two check valves (91; 93; 95; 97; 99) which open in opposite directions.

## Revendications

1. Dispositif de vanne d'amortissement réglable (3) avec un premier groupe de vanne d'amortissement réglable (43) pour une première direction d'écoulement et un second groupe de vanne d'amortissement réglable (45) pour une seconde direction d'écoulement, dans lequel les deux groupes de vanne d'amortissement (43; 45) sont réglables indépendamment l'un de l'autre, **caractérisé en ce que** le premier groupe de vanne d'amortissement (43) ne produit une force d'amortissement que pour une première direction d'écoulement et le second groupe de vanne d'amortissement (45) présente dans le réglage pour la force d'amortissement de valeur maximale une section transversale minimale (79) pouvant être traversée par le fluide d'amortissement, de telle manière que le second groupe de vanne d'amortissement (45) produise une force d'amortissement dans les deux directions d'écoulement.

2. Dispositif de vanne d'amortissement selon la revendication 1, **caractérisé en ce que** les deux groupes de vanne d'amortissement (43; 45) sont disposés dans un boîtier commun (63).

3. Dispositif de vanne d'amortissement réglable selon la revendication 2, **caractérisé en ce que** le boîtier (63) présente pour chaque groupe de vanne d'amortissement (43; 45) une chambre de vanne (65; 67), qui sont spatialement séparées l'une de l'autre par une paroi de séparation (69).

4. Dispositif de vanne d'amortissement réglable selon la revendication 3, **caractérisé en ce que** chaque chambre de vanne (65; 67) ne présente qu'un seul raccord (27; 33) à une chambre de travail unique (15; 17) d'un amortisseur de vibrations (1).

5. Dispositif de vanne d'amortissement réglable selon la revendication 1, **caractérisé en ce qu'**un groupe de vanne anti-retour (75) est associé à au moins un groupe de vanne d'amortissement (45), dans lequel le groupe de vanne anti-retour (75) libère dans une première direction d'écoulement un passage entier et dans la direction opposée un passage limité.

6. Dispositif de vanne d'amortissement réglable selon la revendication 5, **caractérisé en ce que** le groupe de vanne d'amortissement (45) présente une vanne d'entrée passive (61), dans lequel le groupe de vanne anti-retour (75) est disposé dans la vanne d'entrée (61).

7. Dispositif de vanne d'amortissement réglable selon la revendication 5, **caractérisé en ce qu'**un groupe de vanne anti-retour (75) est disposé après au moins un groupe de vanne d'amortissement réglable (45) dans la direction d'évacuation.

8. Dispositif de vanne d'amortissement réglable selon la revendication 1, **caractérisé en ce qu'**un groupe de vanne anti-retour (75) est disposé fonctionnellement dans la direction d'arrivée entre les deux groupes de vanne d'amortissement réglables (43; 45).

9. Dispositif de vanne d'amortissement réglable selon la revendication 8, **caractérisé en ce que** le groupe de vanne anti-retour (75) est disposé à l'intérieur de la paroi de séparation (69).

10. Dispositif de vanne d'amortissement réglable selon l'une quelconque des revendications 1 à 9, **caractérisé en ce que** le groupe de vanne d'amortissement (45) présente un corps de vanne d'étage principal (59), qui forme conjointement avec une face de siège de vanne (77) une vanne d'étage principal (57), qui fournit la section transversale minimale (79).

11. Dispositif de vanne d'amortissement réglable selon la revendication 1, **caractérisé en ce que** la section transversale minimale (79) est formée par une vanne d'ouverture pilote (91; 93; 97), qui est montée fonctionnellement en parallèle avec le groupe de vanne d'amortissement réglable (43).

12. Dispositif de vanne d'amortissement réglable selon la revendication 11, **caractérisé en ce que** la vanne d'ouverture pilote (91; 93; 97) est un composant du dispositif de vanne anti-retour (75).

13. Dispositif de vanne d'amortissement réglable selon la revendication 11, **caractérisé en ce que** le dispositif de vanne anti-retour (75) présente deux vannes anti-retour (91; 93; 95; 97; 99) s'ouvrant en sens contraire.
